Europäisches Patentamt

(19) European Patent Office

Office européen des brevets

(11) Publication number: **0 275 836 B1**

## EUROPEAN PATENT SPECIFICATION

(45) Date of publication of patent specification: **17.07.91** (51) Int. Cl.⁵: **A47K 5/12**

(21) Application number: **87830404.7**

(22) Date of filing: **12.11.87**

(54) **A liquid soap portioning dispenser.**

(30) Priority: **21.01.87 IT 2056687 U**

(43) Date of publication of application:
**27.07.88 Bulletin 88/30**

(45) Publication of the grant of the patent:
**17.07.91 Bulletin 91/29**

(84) Designated Contracting States:
**AT BE CH DE ES FR GB GR LI LU NL SE**

(56) References cited:
**EP-A- 0 045 830**      **EP-A- 0 072 783**
**FR-A- 2 016 862**      **US-A- 4 130 224**
**US-A- 4 349 133**      **US-A- 4 621 749**

(73) Proprietor: **AMCO S.p.A.**
**Via S. Veniero, 14**
**I-20148 Milan(IT)**

(72) Inventor: **Gabrielli, Luigi**
**Via Silva, 29**
**I-20152 Milan(IT)**

(74) Representative: **La Ciura, Salvatore**
**Via Francesco Sforza 3**
**I-20122 Milan(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a liquid soap portioning-dispenser.

Liquid soap dispensers are already known and are chiefly installed in toilet or dressing rooms associated to public houses. They comprise a support and covering envelope or case which is usually mounted on a wall and inside which a replaceable cartridge-type container for the liquid substance is arranged. The substance is caused to be dispensed by action on a lever controlling a tube, usually of rubber material, which is connected to the cartridge container and has a downwardly directed outlet portion, with one or more valves being provided insaid said tube to control flowing-out of the substance.

The liquid soap containers commercially available at present may be considered as belonging to two types, the rigid type and the flexible type.

A rigid type container is a receptacle or can, for example, of a rigid plastics material and has an advantage in that it can be filled by conventional pouring or bottle-filling methods.

However, this rigid container is rather expensive and requires certain measures to be taken on charging the dispenser. Due to the fact that the container is rigid in nature and is not deformed as a result of the liquid flowing out of it, a hole for admission of air has to be provided in its bottom wall, which bottom wall is in an upper position during utilization, since the container is mounted upside down inside the dispenser. In some cases, this hole has already been formed in the bottom walls, it being sufficient to clear the hole after installation in a convenient manner.

Another disadvantage of a rigid container is that it lends itself to reutilization by those attending to the public place where the liquid soap dispenser is installed. Under a practical standpoint, this may lead to clogging of the valve or valves provided in the outlet tube that is usually delivered as a part of the cartridge container- and, thus, to further flowing-out of the liquid being prevented.

On the other hand, a flexible-type container may consist of a bag made of plastics material, which requires a particular filling system. Thus, for example, the bag may be one which is open prior to filling and is sealed after filling has been carried out.

Moreover, owing to the fact that these flexible types of containers have a not well defined shape, they require a properly shaped packaging means to enable them to be handled and charged into the dispenser.

US-A-4 349 133 discloses a liquid soap portioning-dispenser enclosing a cartridge-type container which can be acted upon by a lever (63), said cartridge container being an expansible "accordion" - type container having a pleated sidewall (53) such that the container (39) is both rigid and flexible, in a horizontal direction.

An object of this invention is to provide a liquid soap dispenser utilizing a cartridge container which overcomes the difficulties inherent in prior art cartridge containers while retaining the advantages of these latters. To this end, the invention provides an expansible or 'concertina' - type container of the type described in US-A-4.349.133 which is both rigid and flexible (in a vertical direction) in character. Thus, this container has a well defined shape that may be a cylindrical or prismatic shape, possibly with rounded edges, enabling the container to be easily filled by conventional pouring-type bottle-filling methods: it requires no auxiliary packaging means for handling thereof; and it is able to be squeezed and deformed so during dispensing of the concerned product as to allow for complete escaping of said product and to prevent its reutilization.

An another object of this invention is to provide a dispenser as described above having a lever control system for the product-delivering tube, which system comprises a lever spring-pivoted to the operating lever and able to close the delivery conduit at an upper area thereof, before a profiled portion of the operating lever will act to press the tube to cause a given portion of the product to pass out through a unidirectional valve arranged in the free end of said tube. This control system is known per se (see for example EP-A-0.045.830 and US-A-4.621.749).

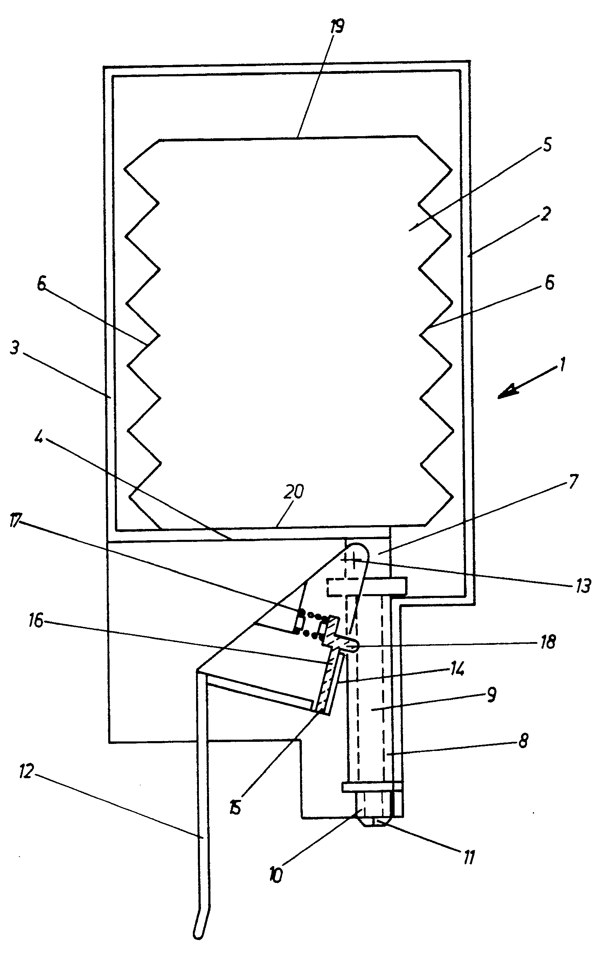

The above and further features of the liquid soap portioning-dispenser according to the invention will better appear from the following detailed description of one embodiment thereof shown by way of a non-limiting example in the figure of the accompanying drawing which is a schematic, part-sectional and part-cutaway side view of the inventive dispenser.

Referring now to the above figure, there is generally designated by 1 a dispenser according to the invention for dispensing a liquid soap or the like product by portions.

This dispenser comprises a support and covering envelope or case 2 which may, obviously, take any other desired shape than that shown in the drawing. In a manner known per se, the case 2 is made-up of two parts of which a front part is, for example, hinged so to the other part as to enable it to be swung open upwardly to give access to the case.

Provided inside the case 2, which is mounted to a wall by a rear part 3 thereof, is a support plate 4 arranged to receive a replaceable, cartridge-type, liquid soap container, shown by reference numeral 5 in the figure of the drawing.

According to a basic feature of this invention, the cartridge container 5 is an expansible or 'concertina'-type container, that is to say of a type having a pleated sidewall 6.

The thus configured container 5, which is made of a plastics material rather small in thickness, is both rigid and flexible in character so that it has the advantages already referred to in the introductive part of this disclosure: it can be filled, through a pipe connection 7, by conventional pouring-type bottle-filling systems, and it requires no wrapping or packaging means, since this container is capable of retaining its original shape which may be a cylindrical or prismatic shape.

Moreover, the container 5 is able to be squeezed and deformed so, as a result of its utilization, that any further reutilization thereof would be difficult as better explained herein below.

Connected with the pipe connection 7, which is downwardly directed since the container is mounted upside down in the dispenser as is well known, is a rubber tube 8 being usually delivered as a part of each refill cartridge.

The tube 8 has a conduit 9 contained therein which communicates with the inner chamber of container 5, while the free outlet end 10 of the tube 8 is controlled by a unidirectional valve 11 which only allows for escaping of liquid from the conduit 9 when required by an user. This valve 11 may, for example, consist of a slit cut in the free end of tube 8 which only opens when liquid in conduit 9 is subjected to a proper pressure which is higher, obviously, than atmospheric.

The tube 8 provided with a delivery valve 11 designed as described above may be considered as known per se.

Delivery of liquid soap from the dispenser is obtained by action on a lever 12 which is pivoted by its end 13 to an inner part of the dispenser, as schematically shown by the drawing, and which has an internal profiled portion 14 arranged to interact with the tube 8.

Spring pivoted to the lever 12 through a spring 17, is the end 15 of a second lever 16 having a pawl means 18 normally jutting out of this second lever 16 so as to overhang the profiled portion 14 of lever 12.

Delivery of liquid soap from container 5 takes place as follows.

An user standing in front of the liquid soap dispenser pulls the lever 12 towards himself so that the lever is rotated counterclockwise about the pivotal axis 13 (as seen when looking at the figure of the accompanying drawing.)

At an initial stage of this rotation, the pawl 18 on lever 16 will squeeze the tube 8 to close the conduit 9. Thereafter, the profile 14 of lever 12 will contact the tube 8 to cause squeezing thereof, while release of spring 17 prevents the pawl 18 from moving further forward.

Thus, a controlled portion of liquid soap will pass out through valve 11.

On the return stroke of lever 12, expansion of the tube 8 will cause a further portion of liquid soap, equal to the delivered portion, to be drawn from container 5 to fill again the conduit 9 therewith.

Due to the fact that, subsequent to each liquid soap delivery, the quantity of liquid soap drawn out of container 5 is not replaced by air, the container 5 tends to be squeezed or collapsed and deformed in a downward direction, until its top wall 19 (as seen when looking at the drawing) is brought into contact with its bottom wall 20 and finally the pleated sidewall 6 will turns round inwardly of the container to allow for complete escaping of liquid product therefrom.

## Claims

1. A Liquid soap portioning-dispenser comprising a support and covering case (1) enclosing a cartridge-type container (5), the cartridge container (5) having an outlet pipe connection (7) to which a tube (8) is secured, the tube (8) containing an inner conduit (9) provided at its outlet end (10) with a unidirectional valve (11) which can be acted upon by a lever (12) characterized in that:
   - the outlet pipe connection is provided on the flat surface of the cartridge:
   - the cartridge container has a pleated sidewall (6) such that it is flexible in a vertical direction.

2. A portioning dispenser according to claim 1, wherein said cartridge container (5) is cylindrical or prismatic in shape and is made of a plastics material.

3. A liquid soap portioning-dispenser according to claim 1, characterized in that the outlet tube is provided with a rubber discharge valve of the lip-type, consisting of a slit cut in the free end of the tube.

4. A liquid soap portioning-dispenser according to claim 1, wherein said lever (12) has a second lever (16), spring pivoted thereto and provided with a pawl or catch means (18) which during operation of said lever (12) acts to close the conduit (9) in the tube (8) before a profiled portion (14) of said lever (12) will squeeze said tube (8) to cause product to escape therefrom.

## Revendications

1. Distributeur doseur de savon liquide, comprenant une boîte de support et de protection (1) renfermant un récipient (5) du type cartouche, ce récipient (5) du type cartouche comportant un tuyau de connexion et de sortie (7) auquel un tube (8) est fixé, ce tube (8) contenant un conduit intérieur (9) pourvu, a son extrémité de sortie (10) d'une soupape unidirectionnelle (11) sur laquelle on peut agir par un levier (12), caractérisé en ce que:
   - le tuyau de connexion et de sortie est prévu sur la surface plane de la cartouche;
   - le récipient du type cartouche comporte une paroi latérale plissée (6) de manière à être flexible en direction verticale.

2. Distributeur doseur suivant la revendication 1, caractérisé en ce que le récipient du type cartouche (5) est de forme cylindrique ou prismatique et est fait en une matière plastique.

3. Distributeur doseur de savon liquide suivant la revendication 1, caractérisé en ce que le tube de sortie est pourvu d'une soupape de décharge en caoutchouc, du type à lèvre, consistant en une fente coupée dans l'extrémité libre du tube.

4. Distributeur doseur de savon liquide suivant la revendication 1, caractérisé en ce que le levier (12) comporte un second levier (16) monté à pivotement et à ressort sur ce levier (12) et pourvu d'un moyen formant doigt ou loquet (18) qui, durant le fonctionnement du levier (12), agit pour fermer le conduit (9) se trouvant dans le tube (8), avant qu'une partie profilée (14) de ce levier (12) exprime ce tube (8) pour provoquer la distribution de produit depuis ce dernier.

## Patentansprüche

1. Portionsspender für Flüssigseife, mit einer Halterung und einem Abdeckgehäuse (1), welches einen patronenartigen Behälter (5) umschließt, wobei der patronenartige Behälter (5) einen Auslaßrohranschluß (7) aufweist, an den ein Rohr (8) befestigt ist, welches eine Innenleitung (9) aufweist, die an ihrem Auslaßende (10) ein in eine Richtung wirkendes Ventil (11) besitzt, das über einen Hebel (12) betätigbar ist, dadurch gekennzeichnet, daß der Auslaßrohranshluß auf der flachen Oberfläche der Patrone vorgesehen ist, und daß der patronenartige Behälter eine gefaltete Seitenwand (6) aufweist und somit in vertikaler Richtung beweglich ist.

2. Portionsspender nach Anspruch 1, dadurch gekennzeichnet, daß der patronenartige Behälter (5) eine zylindrische oder prismatische Form aufweist und aus einem Plastikmaterial hergestellt ist.

3. Portionsspender nach Anspruch 1, dadurch gekennzeichnet, daß das Auslaßrohr ein lippenartiges Ablaßventil aus Gummi aufweist, das aus einem in das freie Ende des Rohrs geschnittenen Schlitz besteht.

4. Portionsspender nach Anspruch 1, dadurch gekennzeichnet, daß der Hebel (12) einen zweiten, über eine Feder gelenkig angeschlossenen Hebel (16) aufweist, der eine Einrast- oder Arretiereinrichtung (18) besitzt, die während der Betätigung des Hebels (12) die Leitung (9) im Rohr (8) schließt, bevor ein profilierter Teil (14) des Hebels (12) das Rohr (8) drückt, um das Produkt herauszulassen.